Europäisches Patentamt

European Patent Office

Office européen des brevets

(19)

(11) Numéro de publication: **0 270 469 B1**

(12)

# FASCICULE DE BREVET EUROPEEN

(45) Date de publication de fascicule du brevet:
06.03.91

(51) Int. Cl.⁵: **A01D 46/24, B25J 9/10, B25J 19/02**

(21) Numéro de dépôt: 87430032.0

(22) Date de dépôt: 04.11.87

(54) Machine robotisée, notamment pour la récolte de fruits.

(30) Priorité: 05.11.86 FR 8615522

(43) Date de publication de la demande:
08.06.88 Bulletin 88/23

(45) Mention de la délivrance du brevet:
06.03.91 Bulletin 91/10·

(84) Etats contractants désignés:
**DE ES FR IT NL**

(56) Documents cités:
**FR-A- 2 452 864**
**FR-A- 2 531 604**
**GB-A- 2 155 747**
**US-A- 4 532 757**
**US-A- 4 548 544**

(73) Titulaire: **ETABLISSEMENTS PELLENC ET MOTTE**
**Quartier Notre Dame Route de Villelaure**
**F-84120 Pertuis(FR)**

Titulaire: **CENTRE NATIONAL DU MACHINI-SME AGRICOLE, DU GENIE RURAL, DES EAUX ET DES FORETS (CEMAGREF)**
**Domaine de Lavalette Avenue du Val de**
Montferrand
**F-34033 Montpellier Cédex(FR)**

(72) Inventeur: **Pellenc, Roger**
**Quartier de la Piscine**
**F-84120 Pertuis(FR)**
Inventeur: **Montoya, José Luis**
**Boulevard Pécout**
**F-84120 Pertuis(FR)**
Inventeur: **Grand d' Esnon, Antoine**
**Les Aspes**
**F-34160 Saint-Bauzille-de-Montmel(FR)**
Inventeur: **Rombaut, Marc**
**La Croix Cuzargues**
**F-34160 Castries(FR)**

(74) Mandataire: **Marek, Pierre**
**28 & 32 rue de la Loge**
**F-13002 Marseille(FR)**

## Description

La présente invention concerne une machine robotisée susceptible d'accomplir des tâches diverses impliquant la reconnaissance d'un objet prédéterminé dans son environnement, et une intervention sur cet objet après sa détection. Cette machine robotisée est, par exemple, avantageusement applicable à la récolte de fruits tels que pommes, poires, pêches, oranges et autres agrumes, etc.. Dans cette application très intéressante, la machine robotisée permet de cueillir individuellement les fruits avec leur pédoncule et de les déposer sans chocs dans un réceptacle, par exemple constitué par une caisse de grande contenance ou palox.

Dans le domaine agricole, on a déjà cherché à robotiser la récolte des fruits afin de s'affranchir des contraintes découlant de la récolte manuelle ou des inconvénients des systèmes de récolte mécanisée (secouage) connues à ce jour. Les techniques utilisées dans les prototypes déjà réalisés de machines de récolte robotisées sont de trois ordres :

- la première, décrite dans le GB-A-2.155.745, consiste à placer une caméra au bout d'un bras mobile muni d'un système de préhension ;
- la seconde décrite dans le FR-A-2.531.604, consiste à disposer une caméra à côté et à proximité d'un bras mobile muni d'un outil de préhension, cette caméra étant placée en lunette de visée, de façon à libérer le champ des mouvements en translation ;
- la troisième décrite dans le US-A-4.632.757, consiste à disposer au centre géométrique de l'appareil, alternativement, soit une caméra, position dans laquelle les coordonnées des fruits sont mémorisées, soit le centre de pivotement du système de préhension, position dans laquelle les fruits sont cueillis.

Dans le premier cas, la caméra se trouve très exposée aux chocs, et elle présente un encombrement important près du système de préhension.

Dans le second cas comme dans le premier, l'outil de préhension ne progresse pas en direction du fruit dans l'axe du faisceau optique de la caméra, ce qui entraine une erreur de visée ne permettant pas d'atteindre le fruit dans une bonne position permettant son cueillage.

Dans le troisième cas, il y a bien progression de l'outil de préhension dans l'axe de visée, mais seulement après déplacement du centre de pivotement du système de préhension, de façon à le placer sur cet axe de visée. Ce déplacement physique a lieu deux fois par cycle de cueillette, et ralentit donc sensiblement le cycle.

Cela explique que les prototypes de machines robotisées conçus suivant ces techniques demeurent au stade de projets.

Dans l'application à la récolte de fruits, un but de la présente invention est donc de remédier aux inconvénients et insuffisances des systèmes robotisés qui ont été préconisés et testés à cette fin, jusqu'à ce jour.

La machine robotisée selon l'invention est notamment remarquable par le fait qu'elle comprend :

- d'une part, un bras de manipulation ou manipulateur monté avec une aptitude de rotation autour de deux axes perpendiculaires et concourants, et dont l'extrémité libre est munie d'un organe de préhension et,
- d'autre part, un système de vision installé fixement au point d'intersection de ces axes de rotation ; ledit bras de manipulation étant conformé de manière à permettre audit organe de préhension une translation dans l'alignement du faisceau optique dudit système de vision, le long d'une trajectoire rectiligne qui croise l'intersection desdits axes de rotation, au centre optique du système de vision.

Il s'agit donc d'un manipulateur à coordonnées sphériques (deux rotations concourantes et une translation vers l'objet à saisir) possédant un système de vision en son centre.

Grâce à cette construction, il est possible de faire coïncider parfaitement le centre de l'organe de préhension avec l'axe du faisceau optique du système de vision, lorsque ledit organe se déplace en direction de l'objet à saisir. De la sorte, l'organe ou outil de préhension se présente toujours dans une position correcte par rapport à l'objet à atteindre qui peut être ainsi saisi efficacement.

D'autre part, le système de vision se trouve installé fixement en un emplacement non exposé aux chocs, de sorte que dans l'application à la récolte de fruits, l'organe de préhension peut pénétrer dans la végétation sans que cela représente un risque d'endommagement dudit système de vision de la machine.

Les buts, caractéristiques et avantages susmentionnés, et d'autres encore, ressortiront mieux de la description qui suit et des dessins annexés dans lesquels :

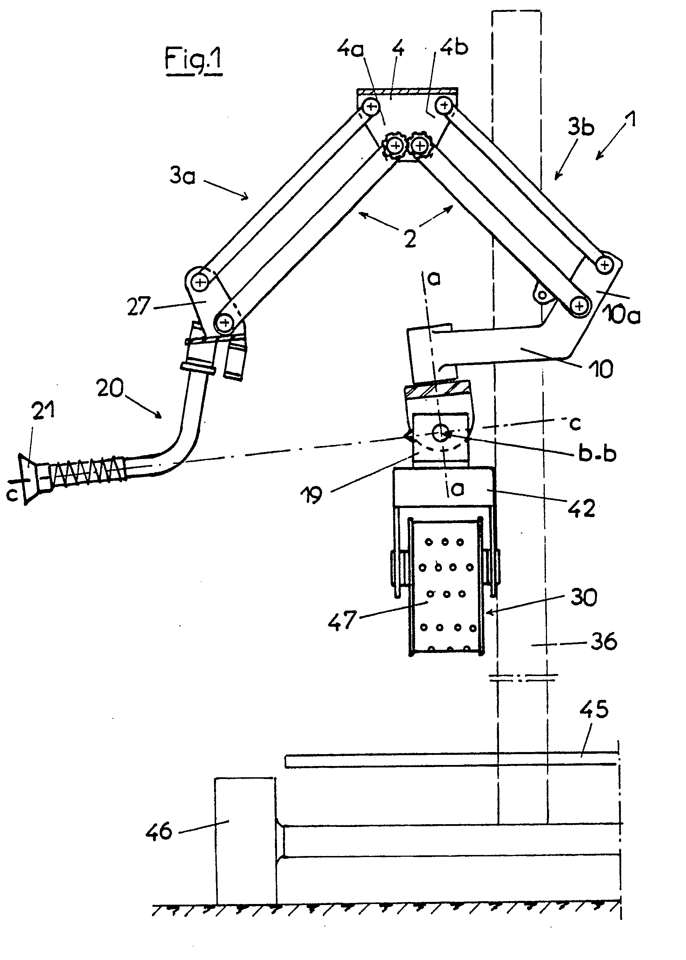

La figure 1 est une vue de face, à caractère schématique, de la machine robotisée selon l'invention, plus spécialement agencée pour constituer une machine de récolte de fruits.

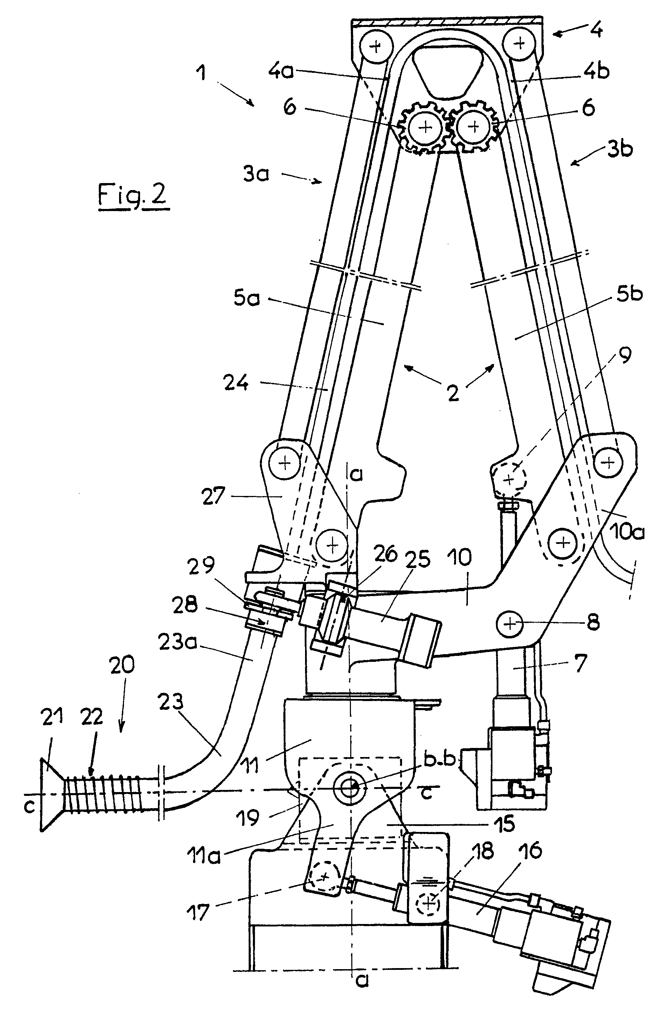

La figure 2 est une vue de face, à plus grande échelle, du module de récolte de cette machine.

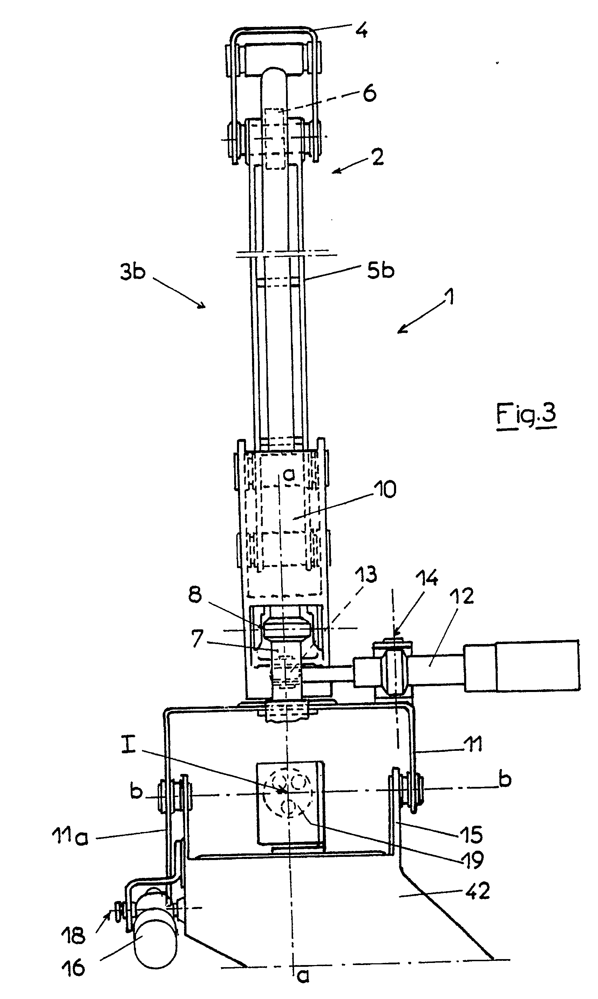

La figure 3 est une vue de côté de la figure 2.

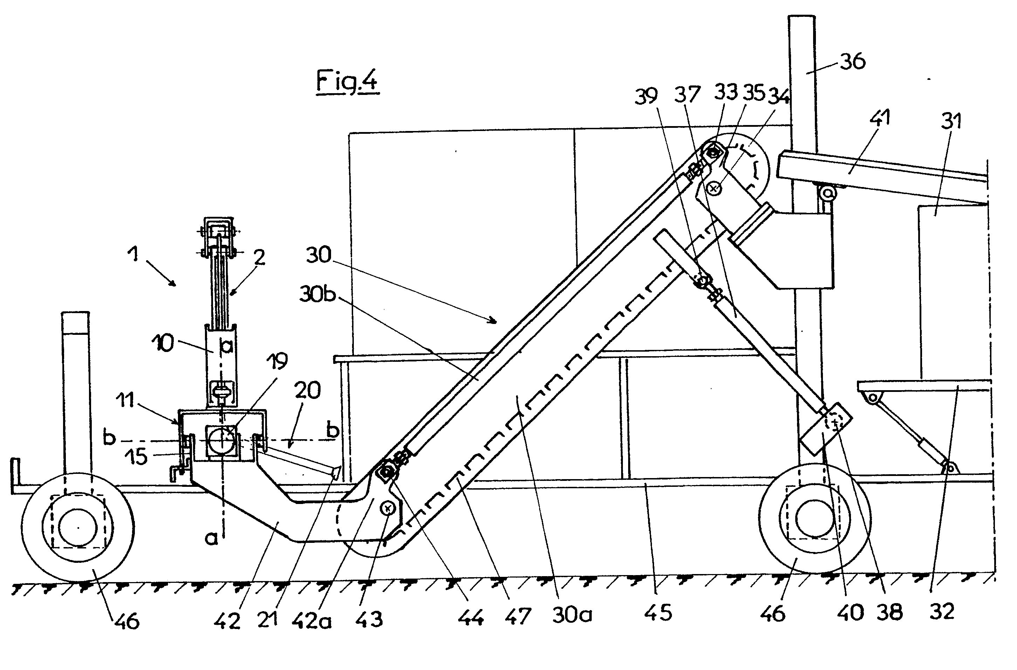

La figure 4 est une vue de côté de la machine de récolte.

La figure 5 est une vue en coupe suivant la ligne 5-5 de la figure 2.

La figure 6 est une vue en plan et en coupe selon la ligne 6-6 de la figure 3.

La figure 7 est une vue latérale d'une variante d'exécution de l'organe de préhension équipant l'extrémité libre du bras repliable du manipulateur.

Les figures 8 à 10 illustrent différentes phases du fonctionnement de cette dernière.

On se reporte auxdits dessins pour décrire un exemple d'exécution intéressant, quoique nullement limitatif, de la machine robotisée selon l'invention.

Selon cet exemple, on décrit une application très avantageuse de l'invention à la réalisation d'une machine robotisée destinée à la récolte de fruits tels que pommes, poires, pêches, oranges et autres agrumes, etc., mais on souligne que cette application n'est aucunement limitative, la machine robotisée selon l'invention pouvant être agencée pour accomplir d'autres tâches agricoles ou industrielles, ou des fonctions diverses.

Cette machine comprend un manipulateur 1 comportant un bras repliable 2 monté en "compas", c'est-à-dire formé de deux branches mobiles 3a, 3b, assemblées à leur sommet, de manière articulée. Plus précisément et avantageusement, ce bras repliable est constitué de deux parallélogrammes articulés 3a, 3b de forme allongée et assemblés, à leur point de rencontre, par l'intermédiaire d'une chape 4 constituant, à la fois, les deux petits côtés voisins 4a, 4b, des deux parallélogrammes articulés. Les deux branches 3a, 3b sont assujetties à un dispositif, connu en soi, permettant un mouvement symétrique desdites branches lors du déploiement ou du repliage du bras et un déplacement rectiligne du préhenseur monté à l'extrémité libre dudit bras. Selon l'exemple illustré, ce dispositif est constitué par des roues dentées 6 engrenant l'une avec l'autre et calées fixement, respectivement, sur les extrémités adjacentes des biellettes internes 5a, 5b constituant l'un des grands côtés des parallélogrammes articulés 3a, 3b. De la sorte, toute modification de l'inclinaison de l'un des parallélogrammes articulés entraîne une modification symétrique de l'inclinaison du second desdits parallélogrammes articulés.

Cet agencement permet d'obtenir le déploiement ou le repliement du bras sous l'action d'un vérin 7 relié, au moyen d'articulations 8 et 9, respectivement, d'une part, à une tourelle pivotante 10 dont un prolongement 10a constitue le petit côté inférieur fixe du parallélogramme articulé 3b assujetti au support dudit bras, et, d'autre part, à la biellette interne 5b de ce parallélogramme articulé.

Il permet aussi d'obtenir un déplacement rectiligne du préhenseur décrit dans la suite du présent exposé et installé à l'extrémité libre du bras repliable.

On souligne que le système à roues dentées 6 peut être remplacé par tout autre dispositif approprié permettant d'obtenir le même résultat.

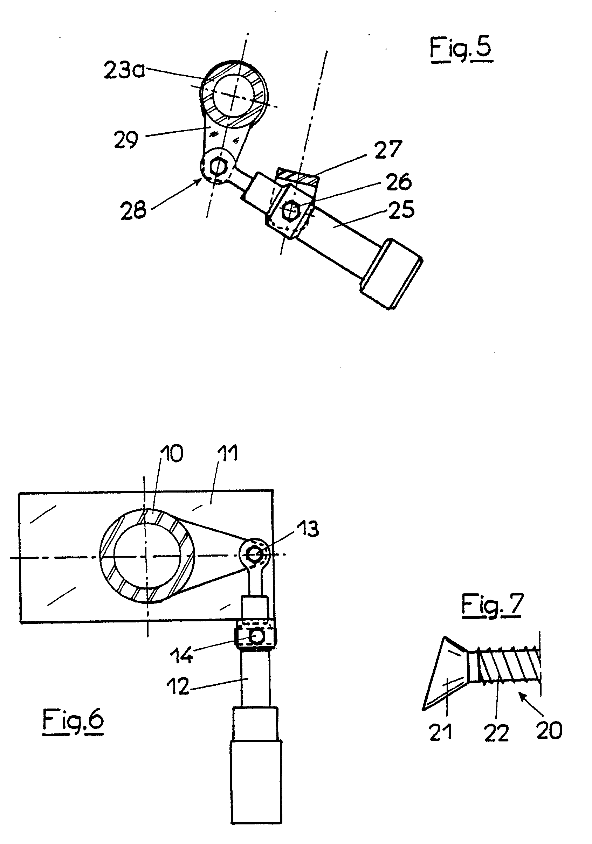

La tourelle pivotante 10 est montée avec une aptitude de rotation autour d'un axe a-a, au moyen d'un palier, sur un robuste étrier 11 en forme de U renversé. Un vérin 12 assure le pivotement de la tourelle 10 et, par conséquent, le pivotement de l'ensemble du manipulateur autour de l'axe a-a, ce vérin étant fixé, au moyen d'articulations 13, 14, respectivement, d'une part, à ladite tourelle pivotante et, d'autre part, à l'étrier 11 (figure 6).

Ce dernier est monté, avec une latitude de basculement, autour d'un axe b-b perpendiculaire à l'axe a-a, sur un berceau 15 ; les axes a-a et b-b étant concourants. Un vérin 16 fixé, au moyen d'articulations 17, 18, respectivement, d'une part, à un levier 11a rigidement solidaire de l'étrier 11, et, d'autre part, au berceau 15, assure le basculement dudit étrier et, par conséquent, le basculement de l'ensemble du manipulateur autour de l'axe b-b.

Un système de vision 19, par exemple constitué par un ensemble de trois microcaméras convergentes, est installé fixement dans le fond du berceau 15, à l'intersection I des axes concourants a-a et b-b.

Ce système de vision, le module de traitement des images enregistrées par ce dernier et l'ordinateur de commande des mouvements du manipulateur, n'entrent pas dans le cadre du présent brevet et ne sont donc pas décrits.

Le manipulateur 1 comporte encore un organe de préhension 20 porté par l'extrémité libre de son bras repliable.

Dans l'application avantageuse de l'invention à la récolte des fruits, cet organe de préhension 20 comprend, par exemple, une tête d'aspiration 21 ayant, de préférence, une forme d'entonnoir, et raccordée, par l'intermédiaire d'un manchon 22 doté d'une capacité de déformation élastique, à un tube rigide coudé 23, lui-même relié à un tuyau souple 24 raccordé à la bouche d'aspiration d'un aspirateur (non représenté) installé sur le châssis de la machine.

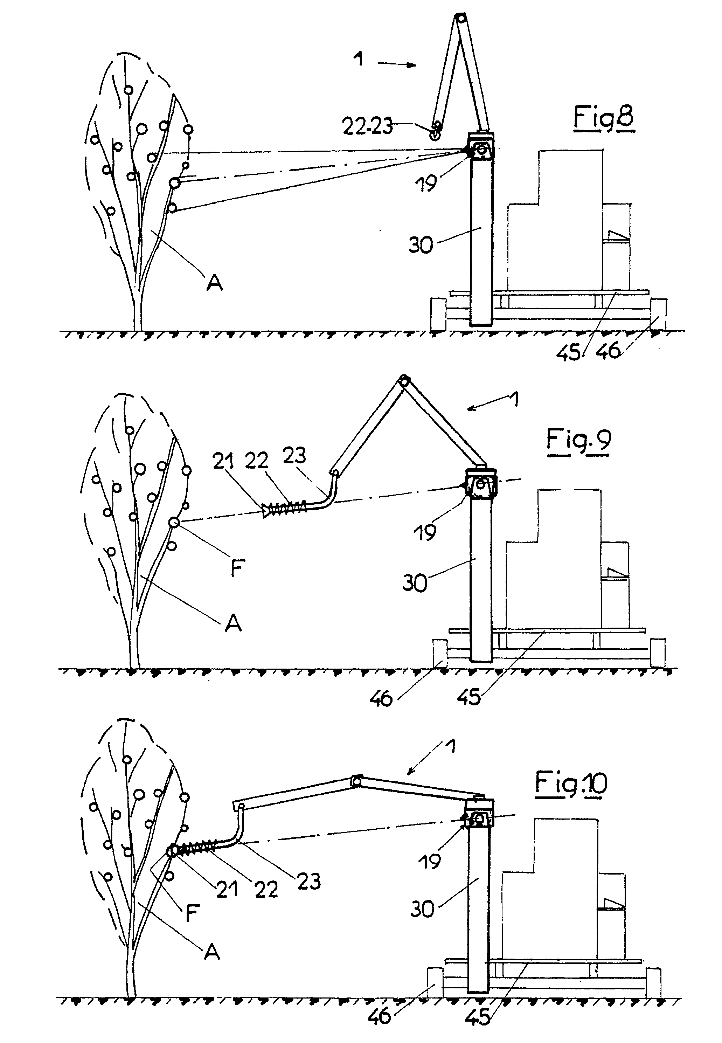

Dans cette application, la tête d'aspiration tronconique 21 peut être tronquée obliquement dans sa partie frontale destinée à venir en contact avec les fruits, par exemple suivant une pente de l'ordre de 30 %, comme le montre la figure 7. Cette disposition favorise la saisie du fruit.

Le tube rigide coudé 23 portant la tête d'aspiration 21 est monté avec une aptitude de rotation autour de l'axe de sa portion 23a de rattachement au bras repliable 2, sur un angle d'environ 90 degrés. De la sorte, la tête d'aspiration 21 peut également effectuer un mouvement circulaire sur un arc d'environ 90 degrés, permettant de dégager le champ de vision de la caméra et de déposer le fruit cueilli.

La rotation de l'organe de préhension ainsi réalisé est obtenue par l'intermédiaire d'un vérin 25 fixé, d'une part, au moyen d'une articulation 26, sur la pièce 27 constituant le petit côté du parallélogramme 3a, et, d'autre part, au moyen d'une articulation 28, sur un palonnier 29 calé sur la portion 23a du tube coudé 23 (figure 5).

Le dispositif d'aspiration peut être équipé d'actionneurs supplémentaires tels que clapet de saisie, capteur de dépression informant le système de commande du manipulateur de la présence d'un fruit dans le cône de préhension ou encore d'un obstacle ayant tordu le manchon souple 22 et donc bouché l'aspiration. Il est également pourvu d'un filtre permettant de retenir les feuilles aspirées, afin d'éviter qu'elles ne puissent obstruer l'aspirateur ou turbine d'aspiration.

Selon une importante caractéristique de l'invention, l'organe de préhension et, plus précisément, selon l'exemple d'application décrit, la tête d'aspiration 21, est monté avec une latitude de translation dans l'alignement du faisceau optique du système de vision 19, le long d'un axe ou trajectoire rectiligne c-c qui croise l'intersection des axes de rotation a-a et b-b du manipulateur, au centre optique dudit système de vision.

Cette disposition permet donc de faire coïncider parfaitement la tête d'aspiration ou autre organe de préhension avec le faisceau optique de détection.

On comprend que le manipulateur 1 son l'invention est un manipulateur à coordonnées sphériques (deux rotations concourantes et une translation vers l'objet à saisir), avec un système de vision disposé fixement par rapport audit manipulateur et placé exactement au centre des rotations et de la translation.

Dans l'application intéressante de l'invention à la récolte des fruits, le module de cueillage (système de vision + manipulateur) est porté par un bras élévateur 30 qui sert à la fois à faire évoluer ledit module de cueillage sur toute la hauteur des arbres et à évacuer les fruits cueillis vers un réceptacle 31 (caisse de grande contenance ou palox) posé sur une plateforme élévatrice 32 équipant la partie arrière de la machine de récolte.

Le bras élévateur 30 est monté avec une aptitude de pivotement dans le plan vertical et il est avantageusement constitué par un parallélogramme articulé de forme allongée dont les grands côtés sont constitués, d'une part, par une robuste poutre-caisson 30a dans laquelle est logé un transporteur par exemple constitué par un tapis sans fin à doigts ou tétines connu en soi, et, d'autre part, par deux barres 30b disposées symétriquement de chaque côté de ladite poutre-caisson. Les extrémités postérieures du caisson 30a et des barres 30b sont, par exemple, fixées, au moyen d'articulations 33, 34, sur un support 35 porté par un élément vertical 36 du bâti de la machine et constituant le petit côté fixe du parallélogramme.

Un vérin 37 fixé, au moyen d'articulations 38, 39, respectivement, d'une part, à la poutre-caisson 30a et, d'autre part, à un élément fixe 40 du bâti de la machine, assure les mouvements de pivotement du bras élévateur 30 dans le plan vertical.

Le transporteur logé dans le bras élévateur déverse les fruits cueillis dans une goulotte 41 installée à la partie arrière de la machine et permettant d'acheminer ces derniers jusqu'au palox 31.

Le petit côté mobile du parallélogramme articulé 30a-30b-35 est constitué par l'une des parties extrêmes d'un support de forme allongée 42 sur laquelle sont fixées, au moyen d'articulations 43, 44, la poutre-caisson 30a et les barres 30b, respectivement, et dont la partie extrême opposée e est agencée pour constituer le berceau 15 dans lequel est installé le dispositif de vision.

Les différents vérins de la machine peuvent être des vérins hydrauliques, pneumatiques ou électriques commandés par des actionneurs hydrauliques, pneumatiques ou électriques connus en soi.

Le manipulateur 1, le système de vision 19, le bras élévateur 30 et les différents dispositifs nécessaires au fonctionnement de la machine, sont installés sur le chassis 45 d'un véhicule automoteur équipé de roues 46 et muni d'un système d'autoguidage lui permettant de se déplacer entre les rangées d'arbres sans conducteur embarqué, ce système d'autoguidage n'entrant pas dans le cadre du présent brevet.

Le fonctionnement de la machine robotisée de récolte qui vient d'être décrite est entièrement automatique, bien que la reprise en commande manuelle soit possible à tout moment.

Le véhicule avance dans l'allée et s'arrête devant un arbre A. L'avant-bras 22-23 du manipulateur 1 est escamoté latéralement pour dégager le champ de vision de la caméra 19. L'ensemble constitué par le système de vision 19 et le manipulateur 1 et porté par le bras élévateur 30, monte le long de la haie fruitière, tandis que le système de vision préalablement réglé en fonction des caractéristiques visibles du fruit à récolter, recherche les fruits (figure 8).

Dès qu'un fruit F est détecté par les deux coordonnées de son centre sur l'image, le bras élévateur s'immobilise. L'avant-bras 22-23 pivote et se place dans le plan de déploiement du bras 2 du manipulateur 1 qui s'oriente en rotation horizontale et verticale sur les deux coordonnées de détection, puis se déploie grâce à son articulation en compas (figure 9).

La tête de cueillage conique 21 portée par le manchon souple 22 de l'avant-bras, avance vers le fruit en translation rectiligne, dans l'axe du faisceau optique de la caméra. Lorsqu'elle entre en contact avec le fruit (figure 10), la dépression due à l'obstruction de son orifice d'entrée par celui-ci, est détectée par un manostat situé sous le manipulateur, au départ du conduit d'aspiration.

Le bras se replie ensuite en entraînant le recul de la tête de cueillage et le détachage du fruit entraîné par cette dernière ; puis l'avant-bras s'escamote en pivotant sur environ 90 degrés et relâche le fruit, par l'action d'un clapet de dépressurisation, sur le tapis à doigts du transporteur 47 logé dans le bras élévateur lequel se décharge dans la goulotte 41 qui achemine la récolte vers le palox disposé à l'arrière de la plateforme.

L'effacement de l'avant-bras a aussi permis de dégager le champ de vision de la caméra pour la prise d'une nouvelle image et l'accomplissement d'une nouvelle séquence de cueillage, le cycle de cueillage se poursuivant tant qu'il reste des fruits détectés sur la scène embrassée par la caméra, ou tant que le nombre d'échecs en cueillette n'excède pas un seuil déterminé.

Si un obstacle se présente sur la trajectoire de la tête de cueillage, la partie souple de l'avant-bras constituée par le manchon 22, se tord et ferme ainsi le conduit d'aspiration (comme si un fruit obstruait l'orifice d'entrée de ladite tête de cueillage), ce qui provoque immédiatement le repliement du bras du manipulateur. Ceci permet d'éviter les conséquences fâcheuses de la rencontre d'obstacles éventuels.

Si le fruit détecté est trop loin, le bras se replie immédiatement après son déploiement complet, puis se réoriente vers une nouvelle cible.

Au bout d'un nombre déterminé d'échecs différents sur la même scène (par exemple après cinq échecs), ou lorsqu'il n'y a plus de fruits détectés sur l'image, l'ensemble de vision et de manipulation se déplace vers le haut de la haie fruitière et le système de vision examine de nouvelles scènes.

Lorsque l'ensemble de vision et de manipulation atteint le sommet de la haie fruitière, il redescend en position basse. Le véhicule avance alors d'une distance correspondant à la largeur de la haie fruitière balayée lors du précédent passage, pour un nouveau cycle de cueillage.

Arrivé en bout d'allée, le véhicule tourne, de façon à commencer un nouveau cycle de récolte dans l'allée voisine.

Afin de ne pas compliquer la description de l'invention, on a décrit une machine robotisée comprenant un seul ensemble de récolte. Il est évident toutefois qu'une telle machine pourra comporter deux ensembles de récolte disposés de part et d'autre de son axe de progression et permettant de cueillir les fruits se trouvant sur les deux côtés de ladite machine.

De même, une machine de ce genre pourra être équipée de plus de deux ensembles de récolte afin d'augmenter son rendement.

En outre, on précise que le "balayage" de la haie fruitière peut s'opérer suivant un mouvement descendant au lieu de s'effectuer selon un mouvement ascendant, comme décrit précédemment.

**Revendications**

1. Machine robotisée, notamment pour la récolte de fruits, comprenant:
   - d'une part, un bras de manipulation ou manipulateur (1) monté avec une aptitude de rotation autour de deux axes perpendiculaires et concourants (a-a, b-b) et dont l'extrémité libre est munie d'un organe de préhension (20), et,
   - d'autre part, un système de vision (19), machine caractérisée en ce que le système de vision (19) est installé fixement au point d'intersection de ces axes de rotation ;
   ledit bras de manipulation (1) étant conformé de manière à permettre audit organe de préhension (20) une translation dans l'alignement du faisceau optique dudit système de vision, le long d'une trajectoire rectiligne (c-c) qui croise l'intersection desdits axes de rotation (a-a, b-b), au centre optique du système de vision.

2. Machine robotisée selon la revendication 1, caractérisée en ce que le manipulateur (1) comprend un bras repliable (2) monté en compas et comportant deux branches constituées par deux parallélogrammes articulés (3a, 3b) de forme allongée et assemblés, à leur point de rencontre, au moyen d'une pièce (4) constituant, à la fois, les deux petits côtés voisins (4a, 4b) de ces deux parallélogrammes articulés, ledit bras repliable étant pourvu d'un dispositif communiquant un mouvement symétrique à ses deux branches, lors de son déploiement ou lors de son repliage, cet agencement et ce mouvement symétrique permettant un déplacement rectiligne de l'organe de préhension (20) de la machine.

3. Machine robotisée suivant la revendication 2, caractérisée en ce que le dispositif permettant d'obtenir un mouvement symétrique des deux branches du bras repliable, comprend deux roues dentées (6) engrenant l'une avec l'autre et calées fixement, sur les extrémités adjacentes des biellettes internes (5a, 5b) constituant l'un des grands côtés des parallélogrammes articulés (3a, 3b).

4. Machine robotisée, selon l'une des revendications 2 ou 3, caractérisée en ce que le bras repliable est monté avec une aptitude de rotation, par l'intermédiaire d'une tourelle pivotante (10) dont un prolongement (10a) constitue le petit côté fixe du parallélogramme articulé (3b) assujetti au support (11) dudit bras repliable, l'organe de préhension (20) étant installé à l'extrémité inférieure de l'autre parallélogramme articulé (3a) du bras repliable dont le déploiement et le repliement sont assurés au moyen d'un vérin (7) reliant ladite tourelle pivotante et la biellette longitudinale interne (5b) articulée sur le prolongement (10a) de cette dernière ; la rotation dudit bras repliable (2) étant, par exemple, obtenue au moyen d'un vérin (12) reliant la tourelle pivotante (10) et le support sur lequel est installé ledit bras.

5. Machine robotisée suivant la revendication 4, caractérisée en ce que la tourelle pivotante (10) portant le bras repliable (2), est installée, avec une aptitude de pivotement, sur un étrier (11) lui-même monté avec une latitude de basculement sur un support (15-42), autour d'un axe (b-b) perpendiculaire à l'axe (a-a) de pivotement de ladite tourelle ; ces axes étant concourants et le basculement de cet étrier et dudit bras repliable étant, par exemple, obtenu au moyen d'un vérin (16) reliant ledit étrier et ledit support.

6. Machine robotisée selon la revendication 5, caractérisée en ce que le système de vision (19) est installé fixement à l'intersection (I) de l'axe (a-a) de pivotement de la tourelle (10) et de l'axe (b-b) de basculement de l'étrier (11).

7. Machine robotisée selon l'une quelconque des revendications 1 à 6, caractérisée en ce que l'organe de préhension (20) installé à l'extrémité libre du bras repliable, est monté avec une aptitude de rotation autour de l'axe de sa portion de rattachement (23a) audit bras.

8. Machine robotisée plus particulièrement destinée à la récolte de fruits, selon l'une quelconque des revendications 1 à 7, caractérisée en ce que l'organe de préhension (20) comprend une tête d'aspiration (21) ayant, de préférence, une forme d'entonnoir, et montée à l'extrémité d'un tube coudé, et en ce qu'il est raccordé, par l'intermédiaire d'un conduit souple (24), à un système d'aspiration.

9. Machine robotisée suivant la revendication 8, caractérisée en ce que la tête d'aspiration (21) est portée par un manchon (22) doté d'une capacité de déformation élastique.

10. Machine robotisée selon l'une des revendications 8 ou 9, caractérisée en ce que la tête tronconique d'aspiration (21) est tronquée obliquement, dans sa partie destinée à venir en contact avec les fruits.

11. Machine robotisée selon l'une quelconque des revendications 1 à 10, caractérisée en ce que l'ensemble constitué par le système de vision (19) et le manipulateur (1), est porté par un bras élévateur (30) monté avec une aptitude de pivotement dans le plan vertical et à l'intérieur duquel est logé un transporteur (47).

12. Machine robotisée suivant la revendication 11, caractérisée en ce que le bras élévateur est constitué par un parallélogramme articulé de forme allongée dont l'un des grands côtés est constitué par une poutrecaisson (30a) dans laquelle est logé le transporteur (47), et dont le petit côté mobile (42a) est constitué par la portion extrême d'un support (42) dont la portion extrême opposée est agencée pour constituer un berceau (15) dans lequel est installé fixement le dispositif de vision (19).

## Claims

1. Robotized machine, especially for fruit harvesting, comprising:
   - firstly a manipulation arm or manipulator (1) mounted so as to be capable of rotating about two perpendicular and intersecting axes (a-a, b-b) and whose free end is equipped with a picking element (20) and
   - secondly a vision system (19), the machine being characterized by the fact that the vision system (19) is installed in a fixed position at the point of intersection of these axes of rotation, the said manipulation arm (1) being designed so as to enable the said picking element (20) to move into alignment with the optical beam of the said vision system along a straight-line trajectory (c-c) which crosses the intersection of the said axes of rotation (a-a, b-b) at the optical centre of the vision system.

2. Robotized machine according to Claim 1, characterized by the fact that the manipulator (1) includes a retractable arm (2) comprising two sections in the form of two elongated, articulated parallelograms (3a, 3b), joined at their meeting point by a piece (4) which at the same time forms the two short neighbouring sides (4a, 4b) of these articulated parallelograms, the said retractable arm being equipped with a device imparting symmetrical movement to both sections when it is deployed or retracted, so that this arrangement and this symmetrical movement enable the picking element (20) of the machine to move in a straight-line.

3. Robotized machine according to Claim 2, characterized by the fact that the device which ensures symmetrical movement of the two sections of the retractable arm (2) comprises two toothed wheels (6) which engage in each other and which are fixed in position on the adjacent ends of the inner members forming one of the long sides of the articulated parallelograms (3a, 3b).

4. Robotized machine according to one of Claims 2 or 3, characterized by the fact that the retractable arm is mounted so as to be capable of rotating by means of a pivoting turret (10), an extension of which (10a) constitutes the fixed short side of the articulated parallelogram (3b) fixed to the support (11) of the said retractable arm, the picking element (20) being installed at the lower extremity of the other articulated parallelogram (3a) of the retractable arm, which is deployed and retracted by means of a jack (7) linking the said pivoting turret and the longitudinal inner member (5b) articulated on the extension (10a) of the latter; the rotation of the retractable arm (2) being, for example, obtained by means of a jack (12) linking the pivoting turret (10) and the support on which the said arm is installed.

5. Robotized machine according to Claim 4, characterized by the fact that the pivoting turret (10) carrying the retractable arm (2) is installed so as to be capable of rotation on a yoke (11) which itself is mounted so as to be capable of tilting on a support (15-42) about an axis (b-b) perpendicular to the pivoting axis (a-a) of the turret; these axes being intersecting axes and the tilting of this yoke and of the retractable arm being actuated by, for example, a jack (16) linking the said yoke and the said support.

6. Robotized machine according to Claim 5, characterized by the fact that the vision system (19) is installed in a fixed position at the intersection (I) of the pivoting axis (a-a) of the turret (10) and of the tilting axis (b-b) of the yoke (11).

7. Robotized machine according to any of Claims 1-6, characterized by the fact that the picking element (20) installed at the free end of the retractable arm is mounted so as to be capable of rotation about the axis of the piece (23a) joining it to the said arm.

8. Robotized ·machine, especially one intended for the harvesting of fruit, according to any of Claims 1-7, characterized by the fact that the picking element (20) comprises a suction head (21), preferably funnel-shaped, and mounted at the end of a curved tube by which it is connected, via a flexible pipe (24), to a suction system.

9. Robotized machine according to Claim 8, characterized by the fact that the suction head (21) is held by a sleeve (22) capable of elastic deformation.

10. Robotized machine according to one of Claims 8 or 9, characterized by the fact that the tapered suction head (21) is obliquely truncated at the part intended to come into contact with the fruit.

11. Robotized machine according to any of Claims 1-10, characterized by the fact that the assembly comprising the vision system (19) and the manipulator (1) is carried by an elevating arm (30) mounted so as to be capable of pivoting in the vertical plane and accommodating a conveyor (47).

12. Robotized machine according to Claim 11, characterized by the fact that the elevating arm is in the form of an elongated parallelogram, one of whose long sides is a box plate girder (30a) accommodating the conveyor (47), and whose short mobile side (42a) comprises the end portion of a support (42) whose opposite end portion is designed to form a cradle (15) in which the vision system (19) is installed in a fixed position.

**Ansprüche**

1. Robotisierte Maschine, insbesondere zum Pflücken von Früchten, mit
   - einerseits einem Betätigungsarm oder einem Manipulator (1), der gleichzeitig um zwei senkrecht aufeinanderstehende Achsen (a-a, b-b) schwenkbar ist und dessen freies Ende mit einem Greiforgan (20) ausgestattet ist und
   - andererseits ein Sichtsystem (19),
   dadurch gekennzeichnet,

daß das Sichtgerät (19) fest im Schnittpunkt dieser Rotationsachsen installiert und der Betätigungsarm ausgebildet ist, dem Greiforgan (26) zu ermöglichen, eine translatorische Bewegung in der Fluchtlinie des optischen Strahlbündels des Sichtsystems entlang einer geraden Linie (c-c) zu gestatten, welche den Schnittpunkt der Rotationsachsen (a-a, b-b) im optischen Zentrum des Sichtgeräts kreuzt.

2. Maschine nach Anspruch 1 , dadurch gekennzeichnet, daß der Manipulator (1 ) einen zusammenfaltbaren Arm (2) aufweist, der einem Zirkel gleich aufgebaut ist und zwei Schenkel besitzt, die von zwei verlängerten schwenkbaren Parallelogrammen (3a, 3b) gebildet werden und an ihren Verbindungspunkten mittels eines Teils (4) miteinander verbunden sind, das gleichzeitig die beiden benachbarten kürzeren Seiten (4a, 4b) dieser beiden schwenkbaren Parallelogramme bilden, wobei die zusammenfaltbaren Arme mit einer Vorrichtung versehen sind, die den beiden Schenkeln eine symmetrische Bewegung während des Auseinanderfahrens oder während des Zusammenfaltens vermittelt und wobei diese Anordnung und diese symmetrische Bewegung eine geradlinige Verschiebung des Greiforgans (20) der Maschine gestattet.

3. Maschine nach Anspruch 2, dadurch gekennzeichnet, daß die Vorrichtung, die eine symmetrische Bewegung der beiden Schenkel des zusammenfaltbaren Arms ermöglicht, zwei ineinandergreifende Zahnräder (6) aufweist, die an den einander gegenüberliegenden Enden der inneren Stäbe (5a, 5b) festgelegt sind, welche die einen der langen Seiten des schwenkbaren Parallelogramms (3a, 3b) bilden.

4. Maschine nach einem der Ansprüche 2 oder 3, dadurch gekennzeichnet, daß der faltbare Arm durch Zwischenschaltung eines schwenkbaren Zwischenteils (10) mit der Fähigkeit zur Rotation ausgestattet ist, wobei eine Verlängerung des Zwischenteils (10a) die kürzere feste Seite des schwenkbaren Parallelogramms (3a) bildet und das Zwischenteil an einem Träger (11) des faltbaren Arms angeordnet ist, und daß das Greiforgan (20) an dem unteren Ende des anderen schwenkbaren Parallelogramms (3a) des zusammenfaltbaren Arms installiert ist, daß seine Bewegungen zum Auseinander- und Zusammenfalten von einem Zylindermittel (7) bewerkstelligt werden, das das genannte drehbare Zwischenteil und den inneren Längsstab (5b) der schwenkbar an der Verlängerung (10a) des letzteren gehalten ist, miteinander verbindet, und daß die Drehung des zusammenfaltbaren Arms (2) beispielsweise mittels eines Zylinders (12) erzielt wird, welcher das schwenkbare Zwischenteil (10) und den Träger verbindet, auf dem der genannte Arm installiert ist.

5. Maschine nach Anspruch 4, dadurch gekennzeichnet, daß das schwenkbare Zwischenteil (10), das den zusammenfaltbaren Arm (2) trägt, mit der Fähigkeit zum Schwenken auf einem Bügel installiert ist, der selber mit einer Fähigkeit zum Kippen um eine Achse (b-b), die senkrecht zur Schwenkachse (a-a) des genannten Zwischenteils verläuft, auf einem Halter (15-42) , gehalten ist, wobei die Achsen zusammenlaufend sind und die Kippbewegung des Bügels und des zusammenfaltbaren Arms beispielsweise mittels eines Zylinders (16) erzielt wird, welcher den Bügel und den Halter miteinander verbindet.

6. Maschine nach Anspruch 5, dadurch gekennzeichnet, daß das Sichtsystem (19) fest auf dem Schnittpunkt (1) der Schwenkachse (a-a) des Zwischenteils (10) und der Kippachse (b-b) des Halters (11) angeordnet ist.

7. Maschine nach einem der Ansprüche 1 bis 6, dadurch gekennzeichnet, daß das an dem freien Ende des faltbaren Arms installierte Greiforgan (20) mit der Fähigkeit zum Rotieren um die Achse seines Befestigungsabschnitts (23a) an dem Arm ausgestattet ist.

8. Maschine, insbesondere zum Pflücken von Früchten, nach einem der Ansprüche 1 bis 7, dadurch gekennzeichnet, daß das Greiforgan (20) einen vorzugsweise trichterförmigen Saugkopf (21) aufweist, der an einem Ende eines gebogenen Rohrs angeordnet ist, und der mittels einer weichen Leitung (24) mit einem Saugsystem in Verbindung steht.

9. Maschine nach Anspruch 8, dadurch gekennzeichnet, daß der Saugkopf (21) von einer Muffe (22) getragen wird, die mit einer Fähigkeit zur elastischen Deformation ausgestattet ist.

10. Maschine nach einem der Ansprüche 8 oder 9, dadurch gekennzeichnet, daß der kegelstumpfförmige Saugkopf (21 ) an seinem Abschnitt, der in Kontakt mit den Früchten tritt, schräg abgeschnitten ist.

11. Maschine nach einem der Ansprüche 1 bis 10, dadurch gekennzeichnet, daß die Anordnung, die von dem Sichtsystem (19) und dem Manipulator (1 ) gebildet wird, von einem Aufzugarm (30) getragen wird, der mit der Fähigkeit zum Schwenken in der senkrechten Ebene ausgestattet ist und in dessen Innerem eine Transporteinrichtung (47) installiert ist.

12. Maschine nach Anspruch 11 , dadurch gekennzeichnet, daß der Aufzugarm von einem Parallogramm länglicher Form gebildet wird, dessen eine der langen Seiten von einem Balken-Kasten (30a) gebildet wird, in dem die Transporteinrichtung (47) aufgenommen ist und dessen kürzere bewegbare Seite (42a) von dem Endabschnitt eines Trägers (42) gebildet wird, dessen gegenüberliegender Endabschnitt ausgestaltet ist, um eine Gabellagerung (15) zu bilden, in dem das Sichtsystem (19) installiert ist.

Fig.1

Fig.2

Fig.3

Fig.4

Fig.5

23a

29

28

27

26

25

Fig.6

10    11

13

14

12

Fig.7

21    22    20

Fig 8

Fig. 9

Fig. 10